# EUROPEAN PATENT SPECIFICATION

(11) **EP 1 790 241 B1**
(45) Date of publication and mention of the grant of the patent: **14.05.2008**
(21) Application number: 05450193.7
(22) Date of filing: 29.11.2005
(51) Int. Cl.: A24D 3/08, A24D 3/14

(54) **Cigarette filters**
Zigarettenfilter
Filtre à cigarette

(43) Date of publication of application: 30.05.2007
(73) Proprietor: Wick, Immunologische Diagnostik u. Beratung KG, 6020 Innsbruck (AT)
(72) Inventor: Bernhard, David, Dr., 6300 Wörgl (AT); Wick, Georg, Dr., 6080 Igls (AT)
(74) Representative: Sonn & Partner Patentanwälte

(56) References cited:
- EP-A- 0 351 252
- US-A- 4 532 947
- US-A- 5 909 736
- US-A1- 2005 133 050

## Description

The present invention relates to cigarette filters and modified filter materials.

Cigarette smoke contains a multitude of harmful components. The major component in tobacco smoke harmful to the health of smokers is tar which consists of many carcinogenic components. In commercially available cigarettes, the tar content of the smoke is reduced by filters. Conventionally, organic filter materials such as cellulose or modified cellulose like acetate cellulose are employed to this end. Among further toxic and hazardous compounds numerous metals and oxidants can be found. The combination of both is devastating for human health. Other harmful components of tobacco smoke are, among others, carbon monoxide, hydrocyanic acid, acetic aldehyde and formic aldehyde, nitrosamines, sulphur dioxide, phenols, mercury, nickel, iron, copper, chromium, aluminium, vanadium, lead, cobalt, silicon, titanium, manganese, zinc, cadmium, barium, strontium and arsenic compounds which are only adsorbed or absorbed to a minor extent by conventional filters. Therefore several specific filters have been developed to reduce the concentration of these compounds in cigarette smoke.

Filter absorbents intended to bind nitrogen monoxide (NO) from tobacco smoke are disclosed in the EP 0 351 252 A2. Therein ferrous ions, capable of complexing NO, are complexed by thiol-containing low molecular weight ligands, which in turn are impregnated as aqueous solution onto a conventional filter material, e.g. cellulose based filters.

Other metal based smoke filters are known from the WO 2004/002247 A2. Therein the catalytic activity of rare earth, zirconium and manganese oxide or hydroxides is used to eliminate toxic compounds such as carbon monoxide, NOₓ, nitrosamines, aldehydes, aromatic amines, sulfates and phosphor sulfonates as well as the metals cadmium, nickel and zinc.

Tobacco smoke filters comprising a porphyrin-ring metal complex as found in haemoglobin, are disclosed in the EP 0 720 434 B1. These filters are capable of inactivating oxidative radicals such as O₂⁻, H₂O₂, NO and other organic radicals, like isoprene-, peroxyl-, alkoxyl-radicals, found in cigarette smoke.

In the US 2005/0133050 A1 an inorganic filter comprising thioalkylsilyl groups covalently bound to an inorganic molecular sieve substrate, e.g. zeolite, for the absorption of mercury and cadmium from cigarette smoke is disclosed.

The metal pollutants in cigarette smoke as well as the oxidants hydrogen peroxide, peroxyradicals, nitrogen oxides, etc. (and sometimes in combination) exert devastating effects on human cells leading to contraction of cells, functional impairment and cell death. Oxidative damage based on cigarette smoke components is a main case leading to atherosclerosis, COPD (Chronic Obstructive Pulmonary Disease), and cancer. Cultures of vascular endothelial cells treated with cigarette smoke extracts develop typical symptoms associated with atherosclerosis, like cyto-skeletal disintegration, the breakdown of cell-cell junctions and low viability through necrotic cell death (Bernhard et al., FASEB J (2003) 17: 2302-2304, online article 10.1096/fj.03-0312fje). Specific reducing compounds such as atorvastatin and N-acetyl cysteine improved cell viabilty up to a level of cells not treated with the harmful cigarette smoke extract.

Atherosclerosis is initiated by a damage of the blood vessel wall, followed by infiltration of the intima by mononuclear cells, formation of foam cells leading to fatty streaks, rearrangement of the vascular smooth muscle layer, and an accumulation of lipids and extracellular matrix. Furthermore, inflammatory processes contribute to atherogenesis and can be observed throughout all stages of the disease. The deleterious consequences of these processes are the formation of atherosclerotic plaques, plaque rupture, thrombus formation, and reduction of the blood flow of arteries, finally resulting in hypoxia and tissue damage. The initial damage to the vascular endothelium is caused by many factors e.g. physical shear stress, chemical and oxidative damage (e.g. LDL oxidation), and immunological stress. A combination of these effects further aggravates the situation, e.g. oxidative stress increases the susceptibility to physical forces or pressure. Smoking was found to be the most important risk factor for the development of early atherosclerotic lesions. Cigarette smoke acutely affects the platelet and monocyte adhesion and increases the stickiness of endothelial cells leading to the formation of atherosclerotic plaques.

It is a goal of the present invention to remove harmful oxidative compounds from polluted air, especially cigarette smoke, by a filter directed at the inactivation or absorption of such compounds, e.g. for the prevention of atherosclerosis.

Therefore, the present invention provides a filter material characterized in that the filter material substantially consists of an organic material comprising covalently bound active thiol groups substantially free of complexing agents. Preferably this filter material is used in a cigarette (smoke) filter. The organic filter materials are capable of both removing harmful metal components of cigarette smoke (foremost cadmium but also Cu, Cr, Ni, Pb, Hg, V, Al) and additionally to reduce harmful oxidants such as hydrogen peroxide, peroxyradicals and nitrogen oxides. It has been previously shown that protection against one group, like by metal adsorption, alone is not sufficient to provide oxidative protection in endothelial cells (Bernhard et al., FASEB J (2005) 19, 1096-1107). The combined protection provided by a filter material according to the present invention therefore provides a substantial improvement, e.g. to prevent atherosclerosis in smokers.

The present invention therefore also provides an improved smoking filter which is characterised by having additionally introduced thiol groups. In contrast to others, more sophisticated filters (such as the ones described in EP 0 720 434 B1 or US 2005/0133050 A1) the filters of the present invention can easily be produced from standard (cigarette) filter material by introducing thiol groups according to standard thiolation techniques known in the art.

Thiol groups are synonymous for -SH or sulfhydryl groups. These groups have surprisingly proven as active (or functionally active) groups for a specific filtering and detoxifying effect in cigarette smoke according to the present invention. This activity is responsible for the redox inactivation of harmful oxidative compounds and the adsorption of harmful metals found in smoke such as mercury, cadmium, copper, nickel, lead, vanadium or aluminium. Oxidants in cigarette are capable of oxidizing cellular proteins (Bernhard et al. (2005), above). Through contact and reaction with the thiol groups in the filter material the oxidants are neutralized, reduced or lose their harmful activity. Thiol groups easily complex metal ions, especially high order metals according to the periodic table of the elements. To ensure an undiminished activity of the thiol groups themselves they are preferably substantially free of such metals, however small metal impurities are well tolerable in a new filter without severe effects. For example the Cd content in cigarette smoke is between 0.5 and 1.5 µg per cigarette. To retain filtering capabilities the contamination in a filter material is therefore substantially less than 10% of this amount. The optimum lies between not detectable and 0.005µg per cigarette. Of course a high purity is preferred with no complexing agents or no detectable complexing agents present in the filter material prior to a use as filter. The filter material substantially consists of an organic material, preferably an organic fibrous material. In this context inorganic impurities may still be present from the manufacturing process, in the range of impurities found in conventional (organic) filters. However, most preferably the filter is free of inorganic impurities. Preferably the filter material is for filtering gases or mainly gaseous substances, or is a smoke filter, or also for filtering solid dust from gases.

In a preferred adaptation the filter material according to the present invention is a filter for smoking of tobacco or herbal products. However, filter material according to the present invention can also be used in large scale filters for e.g. air-conditioning or venting systems. Especially for the use in a car these filters provide a substantial improvement of cabin air quality since harmful substances and metals in dust found in car exhaust can be removed or detoxified. The filters can easily be adapted for a binding or detoxifying capacity to last for many weeks or months.

In a preferred embodiment the thiol groups of the filter material are redox-active. This activity ensures reduction of harmful oxidants and the detoxification of cigarette smoke.

In a preferred embodiment of the present invention, the filter material is based on sepharose, cellulose or modified cellulose, preferably acetyl cellulose or nitro cellulose, filter. These organic materials are excellent carriers for the thiol or sulfhydryl groups. The organic materials can be treated by common chemical techniques to covalently incorporate a functional thiol group (Feist et al., Biochemistry (1981) 20(15), 4243-4246).

Preferably, the thiol group is attached to the organic filter material via a linker-molecule. During synthesis such linker molecules can be incorporated separately or together with the thiol group e.g. by using reagents which comprise both features, e.g. sulfhydryl alkyl components. In use the linker moiety ensures a better flexibility and reactivity of the thiol group, thus optimizing the redox activity of the filter.

Preferably, the thiol group of the filter material according to the present invention is for the removal of harmful substances from the smoke. The thiol group also leads to an altered adsorbtion or absorption property of the filter material leading to a better removal of harmful components such as metals from smoke.

In another preferred embodiment, the thiol group of the filter material is provided by one residue or a combination of residues selected from cystein, N-acetyl cystein, sulfhydryl C₁₋₈-alkyl, -alkenyl, -alkinyl, -alkoxyl, and sulfhydryl phenyl. These residues can be attached to the raw organic filter material by common means known in the field of organic chemistry. Furthermore these groups are thermostable in an organic filter material under smoking conditions.

Another aspect of the present invention is a smoke filter comprising a filter material as described above. For example the filter may comprise only the above mentioned filter material in varying densities, which can be adjusted by the skilled man for each specific use. A filter may also comprise different filter materials, e.g. a portion of a common smoke filter and a portion of the filter material according to the invention.

A preferred filter according to the invention comprises a moisture supplying component. The moisture supplying component improves the filtering properties of the thiol group. Moisture increases the reactivity of the thiol group thus increasing the filtering quality. Especially wet filters or filter materials are preferred.

Preferably the moisture supplying component is a breakable capsule containing an aqueous fluid. Such capsules, which can be broken by slight pressure, e.g. directly applicable by the user, can be attached to or in the filter. Upon breakage the filter material is wetted by the fluid to improve the filtering efficiency.

The present invention also provides a cigarette comprising a filter as described above.

Alternatively the filter can also be included as part of a cigarette holder, e.g. for re-use.

Another aspect of the present invention is a method for the production of a filter material as described above comprising the step of covalently binding a small molecule comprising a thiol group to the organic material. Also the thiol group can be transferred to the organic material by common chemical techniques.

Furthermore the present method for the production of a filter comprises the step of incorporating the filter material into a raw filter. Of course, if only the filter material is used in a filter the filter material can also be shaped or pressed into a desired form for use as a filter.

The present invention also provides the method for the production of a cigarette comprising the step of functionally connecting a filter according to the present invention to a smokeable product in such a way as to enable smoke passage through the filter upon consumption of the cigarette.

Also the method for the production of a cigarette holder comprising the step of incorporating a filter according to the present invention into a conventional cigarette holder is provided. A conventional cigarette holder can be any shaped material, preferably hollow, which can hold a cigarette and allows the flow of cigarette smoke through the holder.

As noted above the detoxifying effects of the filter material according to the present invention can also be used in other filters than a smoke filter, e.g. for cigarette smoking. A preferred use of a filter material according to the present invention is in a venting system, preferably in a car venting system, e.g. as substantial part of a conventional filter. All options given for the smoke filter above, like moistening for better efficiency, can also be employed for the use in the venting system.

The present invention is further illustrated by the following figures and example without being limited thereto.
**Figure 1****:** Schematic representation of a filter with a middle portion of a material with thiol groups and two end portions of a conventional filters. The large arrows indicate the air flow.
**Figure 2****:** Graphical representation of cell viabilty after treatment with cigarette smoke: Sepharose: control, Thiopropylsepharose: SH-filtered smoke.

### Example: Cell viability

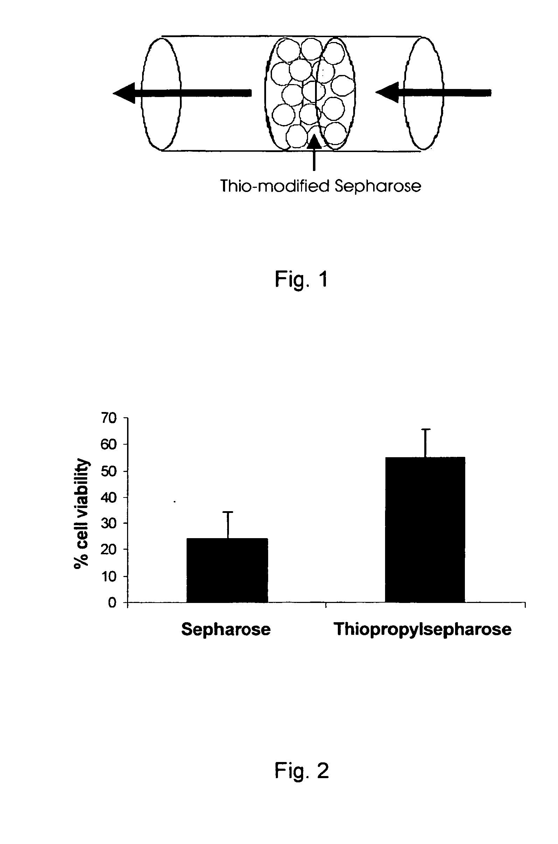

A conventional cigarette filter was divided into two halves. Between those halves sepharose beads (control) or thiopropylsepharose beads (active thiol groups) were located as indicated in fig. 1. Cigarette smoke was pulled through the filter with a pressure and velocity corresponding to normal cigarette smoking by a human (35 ml/2 s followed by a pause of 28 s). The filtered smoke was collected as extracts by bubbling through cell growth medium at 37°C which in turn was used to treat human endothelial cells (HUVEC). The cells were incubated with the extracts for 24h. Afterwards, cell viability was measured by the XTT assay (Proliferation Kit II, XTT; Roche Diagnostics GmbH, Vienna, Austria) according to the manufacturers instructions. This assay detects the cleavage of the tetrazolium salt XTT to a formazan dye, which occurs only in metabolic active cells. The result is given as graphical representation in fig. 2, which shows a low viabilty in cells treated with filters without thiol groups (sepharose control) and high viability in the cells, which were treated with the smoke which went through the organic thiol group filter.

## Claims

1. Filter material **characterized in that** the filter material substantially consists of an organic material comprising covalently bound active thiol groups substantially free of complexing agents.

2. Filter material according to claim 1, wherein the filter material is adapted for a filter for use during smoking of tobacco or herbal products.

3. Filter material according to claim 1 or 2 **characterized in that** the thiol groups are redox-active.

4. Filter material according to any one of claims 1 to 3 **characterized in that** the filter is a sepharose, cellulose or modified cellulose, preferably acetyl cellulose or nitro cellulose, filter.

5. Filter material according to any one of claims 1 to 4 **characterized in that** a thiol group is attached to the organic material via a linker-molecule.

6. Filter material according to any one of claims 1 to 5 **characterized in that** the thiol group is for the removal of harmful substances from the smoke.

7. Filter material according to any one of claims 1 to 6 **characterized in that** the thiol group is provided by one residue or a combination of residues selected from cystein, N-acetyl cystein, sulfhydryl C₁₋₈-alkyl, -alkenyl, -alkinyl, -alkoxyl, and sulfhydryl phenyl.

8. A smoke filter **characterized in that** it comprises a filter material according to any one of claims 1 to 7.

9. Filter according to claim 8 **characterized in that** it comprises a moisture supplying component.

10. Filter according to claim 9 **characterized in that** the moisture of the moisture supplying component improves the filtering properties of the thiol group.

11. Filter according to claim 10 **characterized in that** the moisture supplying component is a breakable capsule containing an aqueous fluid.

12. A cigarette **characterized in that** it comprises a filter according to any one of claims 8 to 11.

13. A cigarette holder **characterized in that** it comprises a filter according to any one of claims 8 to 11.

14. Method for the production of a filter material according to claims 1 to 7 comprising the step of covalently binding a small molecule comprising a thiol group to the organic material.

15. Method for the production of a filter according to any one of claims 8 to 11 comprising the step of incorporating a filter material according to claims 1 to 7 into a raw filter.

16. Method for the production of a cigarette according to claim 12 comprising the step of functionally connecting a filter according to any one of claims 8 to 11 to a smokeable product in such a way as to enable smoke passage through the filter upon consumption of the cigarette.

17. Method for the production of a cigarette holder according to claim 13 comprising the step of incorporating a filter according to any one of claims 8 to 11 into a conventional cigarette holder.

18. Use of a filter material according to any one of claims 1 to 7 in a venting system, preferably in a car venting system.

## Patentansprüche

1. Filtermaterial, **dadurch gekennzeichnet, dass** das Filtermaterial im Wesentlichen aus einem organischen Material besteht, das kovalent gebundene aktive Thiolgruppen umfasst, die im Wesentlichen frei von komplexierenden Mitteln sind.

2. Filtermaterial nach Anspruch 1, wobei das Filtermaterial für einen Filter zur Verwendung während des Rauchens von Tabak- oder Kräuterprodukten ausgelegt ist.

3. Filtermaterial nach Anspruch 1 oder 2, **dadurch gekennzeichnet, dass** die Thiolgruppen redox-aktiv sind.

4. Filtermaterial nach einem der Ansprüche 1 bis 3, **dadurch gekennzeichnet, dass** der Filter ein Sepharosefilter, Cellulosefilter oder ein Filter aus modifizierter Cellulose, vorzugsweise Acetylcellulose oder Nitrocellulose, ist.

5. Filtermaterial nach einem der Ansprüche 1 bis 4, **dadurch gekennzeichnet, dass** eine Thiolgruppe an dem organischen Material über ein Linker-Molekül angebracht ist.

6. Filtermaterial nach einem der Ansprüche 1 bis 5, **dadurch gekennzeichnet, dass** die Thiolgruppe zur Entfernung von schädlichen Substanzen aus dem Rauch vorgesehen ist.

7. Filtermaterial nach einem der Ansprüche 1 bis 6, **dadurch gekennzeichnet, dass** die Thiolgruppe durch einen Rest oder eine Kombination von Resten ausgewählt aus Cystein, N-Acetyl-Cystein, Sulfhydryl-C₁₋₈-Alkyl, -Alkenyl, -Alkinyl, -Alkoxyl, und Sulfhydryl-Phenyl vorgesehen ist.

8. Rauchfilter, **dadurch gekennzeichnet, dass** er ein Filtermaterial nach einem der Ansprüche 1 bis 7 umfasst.

9. Filter nach Anspruch 8, **dadurch gekennzeichnet, dass** er eine feuchtigkeitslieferende Komponente umfasst.

10. Filter nach Anspruch 9, **dadurch gekennzeichnet, dass** die Feuchtigkeit der feuchtigkeitslieferenden Komponente die Filtereigenschaften der Thiolgruppe verbessert.

11. Filter nach Anspruch 10, **dadurch gekennzeichnet, dass** die feuchtigkeitslieferende Komponente eine aufbrechbare Kapsel enthaltend ein wässriges Fluid ist.

12. Zigarette, **dadurch gekennzeichnet, dass** sie einen Filter nach einem der Ansprüche 8 bis 11 umfasst.

13. Zigarettenhalter, **dadurch gekennzeichnet, dass** er einen Filter nach einem der Ansprüche 8 bis 11 umfasst.

14. Verfahren zur Herstellung eines Filtermaterials nach den Ansprüchen 1 bis 7, umfassend den Schritt des kovalenten Bindens eines kleinen Moleküls, das eine Thiolgruppe aufweist, an das organische Material.

15. Verfahren zur Herstellung eines Filters nach einem der Ansprüche 8 bis 11, umfassend den Schritt des Inkorporierens eines Filtermaterials nach den Ansprüchen 7 bis 11 in einen rohen Filter.

16. Verfahren zur Herstellung einer Zigarette nach Anspruch 12, umfassend den Schritt des funktionalen Verbindens eines Filters nach einem der Ansprüche 8 bis 11, mit einem rauchbaren Produkt auf eine Weise, so dass der Rauch den Filter beim Konsumieren einer Zigarette passieren kann.

17. Verfahren zur Herstellung eines Zigarettenhalters nach Anspruch 13, umfassend den Schritt des Inkorporierens eines Filters nach einem der Ansprüche 8 bis 11 in einen konventionellen Zigarettenhalter.

18. Verwendung eines Filtermaterials nach einem der Ansprüche 1 bis 7 in einem Be- oder Entlüftungssystem, vorzugsweise in einem Belüftungssystem eines Fahrzeuges.

## Revendications

1. Matériau pour filtre, **caractérisé en ce que** le matériau pour filtre consiste substantiellement en un matériau organique comprenant des groupes thiols actifs liés de façon covalente substantiellement dépourvus d'agent complexant.

2. Matériau pour filtre selon la revendication 1, dans lequel le matériau pour filtre est adapté pour un filtre pour utilisation lors de la consommation de produits de tabacs ou d'herbes.

3. Matériau pour filtre selon la revendication 1 ou 2, **caractérisé en ce que** les groupes thiols sont redox-actifs.

4. Matériau pour filtre selon l'une quelconque des revendications 1 à 3, **caractérisé en ce que** le filtre est filtre à base de sépharose, de cellulose ou de cellulose modifiée, de préférence à base d'acétylcellulose ou de nitrocellulose.

5. Matériau pour filtre selon l'une quelconque des revendications 1 à 4, **caractérisé en ce qu'**un groupe thiol est lié au matériau organique via une molécule de liaison.

6. Matériau pour filtre selon l'une quelconque des revendications 1 à 5, **caractérisé en ce que** le groupe thiol est prévu pour l'élimination de substances dangereuses de la fumée.

7. Matériau pour filtre selon l'une quelconque des revendications 1 à 6, **caractérisé en ce que** le groupe thiol est apporté par un résidu ou une combinaison de résidus choisis parmi la cystéine, la N-acéthyl cystéine, le sulfhydryle C₁₋₈ -alkyle, -alcényle, -alcynyle, -alcoxyle, et le sulfhydryl phényle.

8. Filtre à fumée **caractérisé en ce qu'**il comprend un matériau pour filtre selon l'une quelconque des revendications 1 à 7.

9. Filtre selon la revendication 8, **caractérisé en ce qu'**il comprend un composant apportant de l'humidité.

10. Filtre selon la revendication 9, **caractérisé en ce que** l'humidité du composant apportant de l'humidité améliore les propriétés de filtration du groupe thiol.

11. Filtre selon la revendication 10, **caractérisé en ce que** le composant apportant de l'humidité est une capsule cassable contenant un fluide aqueux.

12. Cigarette, **caractérisée en ce qu'**elle comprend un filtre selon l'une quelconque des revendications 8 à 11.

13. Porte-cigarette, **caractérisé en ce qu'**il comprend un filtre selon l'une quelconque des revendications 8 à 11.

14. Procédé pour la production d'un matériau pour filtre selon les revendications 1 à 7, comprenant l'étape de liaison de façon covalente d'une petite molécule comprenant un groupe thiol au matériau organique.

15. Procédé pour la production d'un filtre selon l'une quelconques des revendications 8 à 11, comprenant l'étape d'incorporation d'un matériau pour filtre selon l'une quelconque des revendications 1 à 7 dans un filtre brut.

16. Matériau pour la production d'une cigarette selon la revendication 12, comprenant l'étape de liaison de façon fonctionnelle d'un filtre selon l'une quelconque des revendications 8 à 11 à un produit pouvant être fumé de façon à permettre un passage de la fumée à travers le filtre lors de la consommation de la cigarette.

17. Procédé pour la production d'un porte-cigarette selon la revendication 13, comprenant l'étape d'incorporation d'un filtre selon l'une quelconque des revendications 8 à 11 dans un porte-cigarette conventionnel.

18. Utilisation d'un matériau pour filtre selon l'une quelconque des revendications 1 à 7 dans un système de ventilation, de préférence dans un système de ventilation de voiture.
